# EUROPÄISCHE PATENTSCHRIFT

(11) **EP 0 417 532 B1**
(45) Veröffentlichungstag und Bekanntmachung des Hinweises auf die Patenterteilung: **26.05.1993**
(21) Anmeldenummer: 90116318.8
(22) Anmeldetag: 25.08.1990
(51) Int. Cl.: F16F 7/12

(54) **Stossdämpfer in Form eines Schockabsorbers**
Shock-damper in the form of a shock-absorber
Amortisseur de chocs en forme d'absorbeur de chocs

(30) Priorität: 09.09.1989 DE 3930137
(43) Veröffentlichungstag der Anmeldung: 20.03.1991
(73) Patentinhaber: BAYER AG, 51368 Leverkusen (DE)
(72) Erfinder: Rink, Manfred, D.I., D-5000 Köln 60 (DE); Heese, Gerhard D.I., D-5653 Leichlingen (DE)

(56) Entgegenhaltungen:
- EP-A- 0 078 479
- DE-A- 2 918 280
- DE-B- 1 074 618
- FR-A- 1 566 557
- FR-A- 2 555 832
- GB-A- 1 039 300
- US-A- 3 432 200
- US-A- 3 988 389
- US-A- 4 482 672
- DIN 53455
- ISO/R 527

## Beschreibung

Die Erfindung betrifft einen Stoßdämpfer in Form eines Schockabsorbers, bestehend aus einer Absorberhülse aus Kunststoff und einem damit zusammenwirkenden Kolben, wobei der Kolben mindestens einen Aufweitwulst aufweist, dessen Außendurchmesser größer ist als der Innendurchmesser der unverformten Absorberhülse und der Kolben auch in unbelastetem Zustand innerhalb der Absorberhülse angeordnet ist Ein derartiger Stoßdämpfer ist aus der FR-A- 1 566 557 bekannt.

Stoßdämpfer in Form von Schockabsorbern, welche insbesondere bei Crash-Unfällen von Fahrzeugen große Energien auf kurzem Wege absorbieren, sind bekannt. Sie finden Anwendung für Fahrzeugsitze, Bumper u.dgl., lassen sich aber auch in geeigneter Dimensionierung universell anwenden.

Üblich ist die Verwendung von Hydraulikdämpfern. Sie sind zwar sehr wirkungsvoll, aber auch sehr aufwendig, für viele tausend Belastungszyklen ausgelegt und relativ schwer.

Als weniger aufwendige Lösung (DE-A-29 18 280) hat man schon versucht, einen deckelartigen Kolben gegen eine Absorberhülse aus thermoplastischem oder duroplastichem Kunststoff (Epoxidharz) mit einer gewickelten Glasfasereinlage einzusetzen. Ein solcher Schockabsorber ist aber nur einmalig belastbar, da die Hülse bei der auftretenden hohen Beanspruchung gewünschterweise zerstört wird. Er ist auch nur in einer Richtung beaufschlagbar.

Aus DE-B-1 074 618 ist eine Stoßvorrichtung an Eisenbahnfahrzeugen bekannt, welche aus einem Puffer mit kolbenartigem Ende besteht, welches in das Ende eines rohrförmigen, d.h. hülsenartigen Druckübertragungskörpers hineinreicht. Letzterer reicht von einer Wagenstirnseite zur anderen und weitet sich bei Stoßbelastung durch das tiefer eindringende, kolbenartige Ende des Puffers auf. Ein Puffer ist nur jeweils in einer Richtung wirksam.

Bekannt sind auch Stoßdämpfer, bei denen ein Kolben mit Aufweitwulst in eine mit einem Innenliner aus Kautschuk oder Kunststoff versehene Metallhülse (GB-A-1 039 300) oder in eine Hülse aus Kautschuk allein, eintaucht, wobei der Aufweitwulst, wie eingangs beschrieben, einen größeren Außendurchmesser aufweist als der Innendurchmesser der Hülse bzw. des Innenliners beträgt.

Bei dem aus US-A-3 432 200 bekannten Stoßdämpfer ist die Absorberhülse von einer steifen, anliegenden Manschette umschlossen und der Kolben dringt erst bei Schockbelastung in die Absorberhülse ein. Mittels eines Hebels muß der Kolben nach der Schockbelastung wieder in die Ausgangsposition zurückgestellt werden.

Es besteht die Aufgabe, Stoßdämpfer dieser Art so zu gestalten, daß sie als Schockabsorber verwendbar sind und insbesondere eine mehrmalige Beanspruchung, und zwar in beiden Richtungen, zulassen.

Es besteht die Aufgabe, einen preiswerten, der Beanspruchungshäufigkeit angepaßten Stoßdämpfer zur Schockabsorption zur Verfügung zu stellen, welcher eine mehrmalige Beanspruchung zuläßt und insbesondere in beiden Richtungen funktionsfähig ist.

Gelöst wird diese Aufgabe dadurch, daß die Absorberhülse aus einem termosplastischen Kunststoff mit einer Reißfestigkeit σ_{R} von mindestens 40 MPa, einer Reißdehnung ε_{R} von mindestens 60 %, einer Streckspannung σ_{S} von mindetens 40 MPa und einer Dehnung bei Streckspannung ε_{S} von mindestens 3,5 % (jeweils nach ISO/R 527 bzw DIN 53 455) besteht und längs ihres vorgesehenen Verformungsbereiches in radialer Richtung ungehindert verformbar ist.

Thermoplastische Kunststoffe mit diesen physikalischen Eigenschaften gewährleisten bei der zweckgemäßen Beanspruchung optimales Verhalten, und zwar insbesondere hinsichtlich der Kontraktion der Absorberhülse auf ihren ursprünglichen Außendurchmesser nach der Beanspruchung. Thermoplastische Kunststoffe mit darunter liegenden Werten sind auch verwendbar, erfahren aber teils eine unerwünschte plastische Verformung, wodurch die mehrmalige Beanspruchbarkeit eingeschränkt werden könnte.

Besonders gute Ergebnisse lassen sich mit Kunststoffen mit einer Reißfestigkeit σ_{R} um 50 MPa und eine Reißdehnung ε_{R} um 85 % sowie einer Streckspannung σ_{S} um 55 MPa und einer Dehnung ε_{S} um 5,5 % erzielen. Der Zug-E-Modul ε_{Z} sollte etwa um 2200 MPa betragen.

Besonders geeignet ist als Ausgangsmaterial für die Absorberhülse ein thermoplastisches Blend aus Polycarbonat und Acrylnitril-Butadien-Styrol-Copolymeren, wie es in der DE-A-22 59 565 und DE-A-23 53 428 (beide entsprechend US-A-3 988 389) beschrieben ist.

Ebenfalls besonders bevorzugt als Material für die Absorberhülse ist ein Blend aus Polycarbonat und Polybutylenterephthalat, beschrieben in DE-A-31 18 526 (entsprechend US-A-4 482 672).

Derartige Mischungen zeichnen sich durch besondere Alterungsstabilität der Kautschukanteile aus.

Der neuartige Stoßdämpfer zeichnet sich durch geringe Baugröße bei hoher Energieabsorption sowie durch geringes Gewicht aus. Er ist in beiden Richtungen seiner Achse funktionsfähig. Diese Eigenschaften erlauben besonders günstig eine Verwendung des neuen Stoßdämpfers zur Schockabsorption an Fahrzeugsitzen bei Auffahrunfällen. Der thermoplastische Kunststoff der Absorberhülse besitzt die Eigenschaft, daß er bei Beanspruchung durch elastische Verformung sozusagen über den Aufweitwulst "fließt", wobei die Absorberhülse anschließend wieder ihren ursprünglichen Durchmesser annimmt.

Das Einbringen des Kolbens in die Absorberhülse erfolgt im Prinzip in der gleichen Weise wie bei der wirklichen Beanspruchung, nur erheblich langsamer.

Kolben und Kolbenstange sind aus Stahl oder aus einem geeigneten, gegebenenfalls glasfaserverstärkten Kunststoff, wie Polyamid, gefertigt. Je nach Anwendungszweck sind die Kolbenstange und die Absorberhülse mit entsprechenden Anbindungen versehen; das Ende der Kolbenstange beispielsweise mit einem Kopf zum Durchschieben einer Schraube, die Absorberhülse beispielsweise mit einem Widerlager, welches ebenfalls einen Kopf oder Flansch zum Befestigen aufweist. Die Kolbenstange sollte mindestens in einer Gleitführung gelagert sein, vorteilhafterweise besser in zwei Gleitführungen, nämlich vorzugsweise an den Enden eines Widerlagers, in welchem die Absorberhülse befestigt ist. Kolbenstange und Widerlager können aber auch Flansche zum Befestigen aufweisen. Erforderlichenfalls läßt sich zumindest ein Flansch unter einem Winkel zur Achse der Absorberhülse und Kolbenstange anordnen, falls dies die konstruktiven Gegebenheiten erfordern. Wichtig ist allein, daß die Absorberhülse in radialer Richtung außen herum so viel Spielraum aufweist, daß bei ihrer Verformung durch den Kolben bzw. Aufweitwulst immer noch Freiraum zu anderen Bauteilen bleibt.

Die Querschnittsgeometrie des Kolbens bzw. des Aufweitwulstes und der Absorberhülse wird in der Regel rund sein, und zwar allein schon aus fertigungstechnischen Gründen. Eine elliptische oder mehreckige Querschnittsform ist aber durchaus ebenfalls realisierbar.

Wenn der Kolben mehrere Aufweitwülste aufweist, lassen sich höhere Energien absorbieren. Dabei ist der Abstand der Aufweitwülste von Einfluß. Je größer dieser Abstand ist, desto mehr kann sich die Absorberhülse dazwischen wieder einschnüren. Erforderlichenfalls ist der Außendurchmesser der Aufweitwülste unterschiedlich wählbar. Je nach Beanspruchungsrichtung wird, sofern der dickere Aufweitwulst zuerst beansprucht wird, auf kürzerem Wege mehr Energie absorbiert als in der Gegenrichtung, in welcher der dünnere Aufweitwulst zuerst anspricht. Diese Ausführungsform ist immer dann von Vorteil, wenn man in der einen Richtung eine schnellere Energieabsorption erzielen möchte als in der Gegenrichtung.

Für die Gestaltung des Kolbens mit Aufweitwulst im Längsschnitt gibt es die Alternative einer stetigen Außenkontur und einer unstetigen Außenkontur.

Eine sinusförmige Außenkontur dürfte sich am häufigsten anbieten, aber auch jede andere stetige Krümmung kann im speziellen Fall ihre Vorteile bieten. In der Regel verläuft die Kontur hohlkehlenförmig nach außen, geht dann in die entgegengesetzte Krümmung über, um nach dem Erreichen des maximalen Durchmessers vorzugsweise wieder spiegelbildlich zu verlaufen. Zum unstetigen Verlauf der Außenkontur im Längsschnitt sieht man Anfasungen vor, welche zur Mittelachse des Kolbens einen Winkel von vorzugsweise 30° bis 60°
einschließen. Je größer dieser Winkel ist, desto stärker ist die Absorption. In der Regel wird man eine Anfasung mit einem größeren Winkel wählen, welche dann in eine Anfasung kleineren Winkels abknickt. Danach schließt sich dann ein zylindrischer Abschnitt maximalen Durchmessers an. Auf der anderen Seite kann der Aufweitwulst ebenfalls mit Anfasungen verschiedenen Winkels versehen sein. Es versteht sich auch, daß gekrümmte Abschnitte mit Anfasungen kombinierbar sind.

Wenn die Absorberhülse mindestens in einer Beanspruchungsrichtung zunehmende Wanddicke aufweist, wird eine gewünschte Dämpfungscharakteristik erreicht. Nimmt die Wandstärke zu, so nimmt auch die Dämpfung bei Beanspruchung in dieser Richtung zu; bei abnehmender Wandstärke nimmt sie analog ab. Die Wandstärkenänderung läßt sich auch durch außenliegende Rippen oder im Extremfalle innenliegende Nuten in Längsrichtung erzielen. Auch außen an der Absorberhülse vorgesehene Umfangswülste oder innen vorgesehene Ringnuten bewirken ähnliche Eigenschaften wie mehrere Aufweitwülste.

In der Zeichnung ist der neue Stoßdämpfer in zwei Ausführungsbeispielen rein schematisch im Schnitt dargestellt und nachstehend näher erläutert. Es zeigen:
- Fig. 1: ein erstes Ausführungsbeispiel des Stoßdämpfers und
- Fig. 2: ein zweites Ausführungsbeispiel.

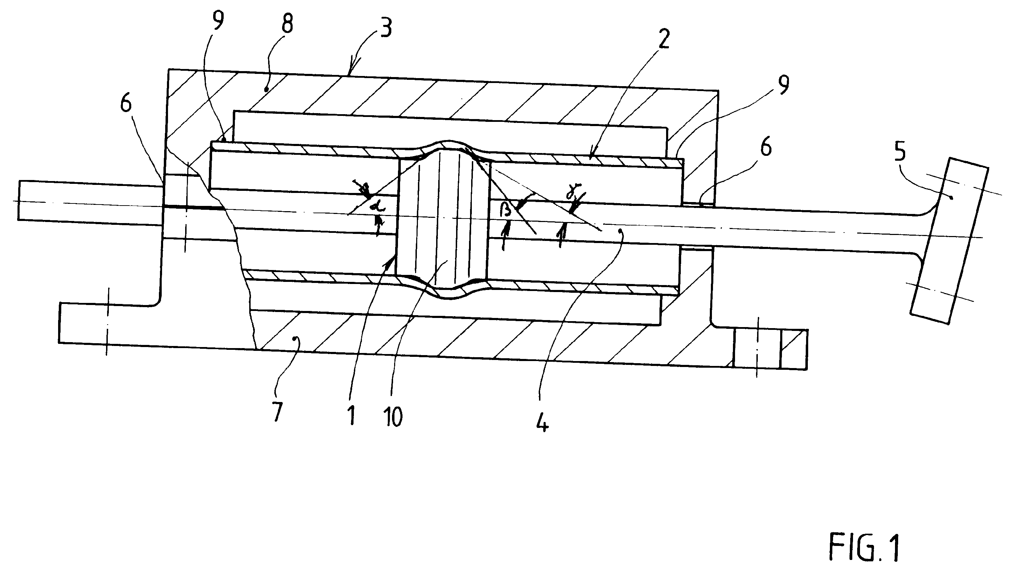

In Fig. 1 besteht der Stoßdämpfer aus einem Kolben 1, einer Absorberhülse 2 und einem Widerlager 3 für die Absorberhülse 2. Der Kolben 1 ist auf einer Kolbenstange 4 angeordnet, welche an einem Ende einen Anschlußflansch 5 besitzt und beidseitig im Widerlager 3 in Gleitführungen 6 gelagert ist Kolben 1, Kolbenstange 4 und Anschlußflansch 5 sind aus Stahl gefertigt. Das Widerlager 3 besteht aus zwei geschmiedeten metallischen Lagerschalen 7 und 8, von denen die Lagerschale 7 auf einem Fundament befestigbar ist und die Lagerschale 8 als Deckel mit der Lagerschale 7 verschraubt ist, so daß die Absorberhülse 2 in Zentrierungen 9 eingespannt ist. Der Kolben 1 besitzt einen Aufweitwulst 10, dessen maximaler Außendurchmesser größer ist als der Innendurchmesser der Absorberhülse 2 Von links nach rechts in der Darstellung zeigt der Kolben 1 mit dem Aufweitwulst 10 folgende Geometrie: Einen zylindrischen Abschnitt von 5 mm Breite und einen dem Innendurchmesser der Absorberhülse 2 entsprechenden Außendurchmesser, einen sich konisch unter dem Winkel α von 45° erweiternden Abschnitt (Anfasung) von 5 mm Breite, einen zylindrischen Abschnitt von 5 mm Breite mit maximalem Durchmesser, einen sich unter einem Winkel β von 30° konisch verjüngenden Abschnitt von 2 mm Breite, einen weiteren, sich jedoch unter einem Winkel γ von 45° konisch verjüngenden Abschnitt von 3 mm Breite und einen in Durchmesser und Breite dem ersten Abschnitt entsprechenden Abschnitt. Die Absorberhülse 2 besitzt einen Innendurchmesser von 47 mm im unverformten Bereich und von 50 mm im maximal verformten Bereich. Ihre Wandstärke im unverformten Bereich beträgt 1,5 mm. Sie besteht aus einem Blend aus Polycarbonat und Acrylnitril-Butadien-Styrol-Copolymer mit einer Reißfestigkeit σ_{R} von 50 MPa, eine Reidehnung ε_{R} von 85 %, einer Streckspannung σ_{S} von 55 MPa, einer Dehnung von ε_{S} von 5,5 % und einem Zug-E-modul ε_{Z} von 2200 MPa (Handelsprodukt ®Bayblend T 85 MN der Bayer AG, Leverkusen BRD, gemäß Merkblatt Best.-Nr. KU 46151 Ausgabe 8.84, D4- 838/845319).

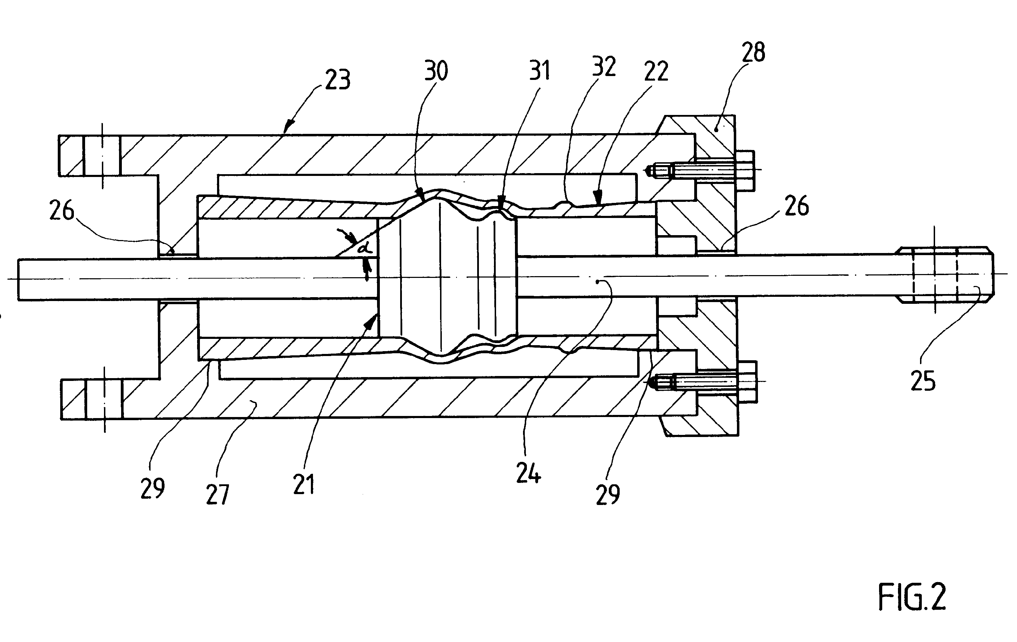

In Fig. 2 besteht der Stoßdämpfer aus einem Kolben 21, einer Absorberhülse 22 und einem Widerlager 23 für die Absorberhülse 22. Der Kolben 21 auf einer Kolbenstange 24 angeordnet, welche an einem Ende einen Anschlußkopf 25 besitzt und beidseitig in Gleitführungen 26 gelagert ist. Der Kolben 21 und die Kolbenstange 24 sind aus glasfaserverstärktem Epoxidharz gefertigt. Das ebenfalls aus glasfaserverstärktem Eposidharz gefertigte Widerlager 23 besteht aus einer Hülse 27 und einem Deckel 28, welche miteinander verschraubt sind und die Absorberhülse 22 in Zentrierungen 29 einspannen. Der Kolben 21 ist mit zwei Aufweitwülsten 30, 31 versehen, welche ineinander übergehen. Der Kolben 21 mit den Aufweitwülsten 30 und 31 zeigt in der Darstellung von links nach rechts folgende Geometrie: Einen zylindrischen Abschnitt von 6 mm Breite und einen dem Innendurchmesser der Absorberhülse 22 entspreschenden Durchmesser, einen sich konisch unter einem Winkel α von 30° erweiternden und in eine Sinuskurve übergehenden Abschnitt von 10 mm Breite, welcher den Maximaldurchmesser erreicht, einen Abschnitt von 10 mm Breite bis zum Erreichen eines Minimaldurchmessers, welcher kleiner ist als der Innendurchmesser der Absorberhülse 22, einen Abschnitt mit erneut ansteigender Sinusform bis zu einem zweiten, jedoch geringeren Maximadurchmesser, welcher größer ist als der Innendurchmesser der Absorberhülse 22, und schließlich einen Abschnitt von 6 mm Breite, in welchem die Sinusform wieder abfällt und in die dem Innendurchmesser der Absorberhülse 22 entspreschende Zylinderform übergeht. Die Absorberhülse 22 beistzt an jener Stelle, an der der Kolben 21 nach dem Einschieben plaziert ist, in unverformtem Zustand eine Wandstärke von 3 mm. Der Innerdurchmesser beträgt in unverformten Zustand 30 mm. In der Darstellung nimmt die Wandstärke von der Position des Kolbens 21 ausgehend nach beiden Richtungen stetig bis auf 4 mm zu. Nach rechts zu besitzt die Absorberhülse 22 einen Außenwulst 32 mit einem Außendurchmesser von 40 mm. Sie besteht aus einem Blend aus Polycarbonat und Polybutylenterephtalat mit einer Reißfestigkeit σ_{R} 57 MPa und eine Reißdehnung von 120 % sowie einer Streckspannung σ_{S} von 55 MPa und einer Dehnung von 4 % und einem Zug-E-Modul ε_{Z} von 2200 MPa. (Handelsprodukt ®Makroblend PR 51 der BAYER AG, Leverkusen, BRD, gemäß Merkblatt KU 47.404 vom 15.6.1987).

## Patentansprüche

1. Stoßdämpfer in Form eines Schockabsorbers, bestehend aus einer Absorberhülse (2, 22) aus Kunststoff und einem damit zusammenwirkenden kolben (1, 21), wobei der Kolben (1, 21) mindestens einen Aufweitwulst (10, 30; 31) aufweist, dessen Außendurchmesser größer ist als der Innendurchmesser der unverformten Absorberhülse (2, 22) und der Kolben (1,21) auch in unbelastetem Zustand innerhalb der Absorberhülse (2, 22) angeordnet ist, **dadurch gekennzeichnet**, daß die Absorberhülse (2, 22) aus einem thermoplastischen Kunststoff mit einer Reißfestigkeit σ_{R} von mindestens 40 MPa, einer Reißdehnung ε_{R} von mindestens 60 %, einer Streckspannung σ_{S} von mindestens 40 MPa und einer Streckdehnung ε_{S} von mindestens 3,5 % (jeweils nach ISO/R 527 bzw, DIN 53 455) besteht und längs ihres vorgesehenen Verformungsbereiches in radialer Richtung ungehindert verformbar ist.

2. Stoßdämpfer nach Anspruch 1, dadurch gekennzeichnet, daß die Absorberhülse (2, 22) aus einem Blend aus Polycarbonat und Acrylnitril-Butadien-Styrol-Copolymeren besteht.

3. Stoßdämpfer nach Anspruch 1, dadurch gekennzeichnet, daß die Absorberhülse (2, 22) aus einem Blend aus Polycarbonat und Polybutylenterephthalat besteht.

4. Stoßdämpfer nach einem der Ansprüche 1, 2 oder 3, gekennzeichnet durch die Verwendung zur Schockabsorption an Fahrzeugsitzen.

5. Stoßdämpfer nach einem der Ansprüche 1 bis 4, dadurch gekennzeichnet, daß der Kolben (21) mehrere Aufweitwülste (30;31) aufweist.

6. Stoßdämpfer nach einem der Ansprüche 1 bis 5, dadurch gekennzeichnet, daß der Kolben (1, 21) mit dem Aufweitwulst (10, 30; 31) im Längsschnitt eine stetige Außenkontur aufweist.

7. Stoßdämpfer nach einem der Ansprüche 1 bis 5, dadurch gekennzeichnet, daß der Kolben (1, 21) mit dem Aufweitwulst (10, 30;31) im Längsschnitt eine unstetige Außenkontur aufweist.

8. Stoßdämpfer nach einem der Ansprüche 1 bis 7, dadurch gekennzeichnet, daß die Absorberhülse (22) in mindestens einer Beanspruchungsrichtung variierende Wanddicke aufweist.

## Claims

1. A shock-damper in the form of a shock-absorber, comprising an absorbing sleeve (2, 22) made of plastics material and a piston (1, 21) cooperating therewith, the piston (1, 21) comprising at least one expanding bead (10, 30; 31), whose external diameter is larger than the internal diameter of the non-deformed absorbing sleeve (2, 22), and the piston (1, 21) also being arranged within the absorbing sleeve (2, 22) in its unloaded state, characterised in that the absorbing sleeve (2, 22) is made of a thermoplastic plastics material having a tearing strength σ_{R} of at least 40 MPa, a tearing elasticity ε_{R} of at least 60%, a yield stress σ_{S} of at least 40 MPa and a yield elasticity ε_{S} of at least 3.5% (in each case according to ISO/R 527 or DIN 53 455) and can be deformed in the radial direction in an unimpeded manner along its provided deformation region.

2. A shock-damper according to claim 1, characterised in that the absorbing sleeve (2, 22) is made of a blend of polycarbonate and acrylnitrile-butadiene-styrene-copolymers.

3. A shock-damper according to claim 1, characterised in that the absorbing sleeve (2, 22) is made of a blend of polycarbonate and polybutylene-terephthalate.

4. A shock-damper according to one of claims 1, 2 or 3, characterised by the use for shock absorption in vehicle seats.

5. A shock-damper according to one of claims 1 to 4, characterised in that the piston (21) comprises a plurality of expanding beads (30; 31).

6. A shock-damper according to one of claims 1 to 5, characterised in that the piston (1, 21) with the expanding bead (10, 30; 31) has a constant external contour in its longitudinal section.

7. A shock-damper according to one of claims 1 to 5, characterised in that the piston (1, 21) with the expanding bead (10, 30; 31) has a varying external contour in its longitudinal section.

8. A shock-damper according to one of claims 1 to 7, characterised in that the absorbing sleeve (22) has a varying wall thickness in at least one stressing direction.

## Revendications

1. Amortisseur sous forme d'absorbeur de chocs composé d'une gaine d'absorbeur (2, 22) en plastique et d'un piston concourant (1, 21), le piston (1, 21) présentant au moins un bourrelet d'évasement (10, 30, 31) dont le diamètre externe est supérieur au diamètre interne de la gaine d'absorbeur déformée (2, 22) et étant logé, même à l'état non chargé, à l'intérieur de la gaine d'absorbeur (2,22), caractérisé en ce que la gaine d'absorbeur (2, 22) se compose d'un matériau thermoplastique qui présente une résistance à la traction σ_{R} d'au moins 40 MPa, une élongation à la rupture ε_{R} d'au moins 60 %, un effort de tension σₛ d'au moins 40 MPa et une élongation à l'effort de tension ε_{S} d'au moins 3,5 % (d'après, respectivement, ISO/R 527 et DIN 53 455) et peut être déformé sans problème en direction radiale le long de sa zone de déformation prévue.

2. Amortisseur selon la revendication 1 caractérisé en ce que la gaine d'absorbeur (2, 22) se compose d'un mélange de polycarbonate et de copolymères acrylonitrile-butadiènestyrène.

3. Amortisseur selon la revendication 1 caractérisé en ce que la gaine d'absorbeur (2, 22) se compose d'un mélange de polycarbonate et de téréphtalate de polybutylène.

4. Amortisseur selon une des revendications 1, 2 ou 3 caractérisé par sa mise en oeuvre pour l'absorption des chocs sur les sièges de véhicules.

5. Amortisseur selon une des revendications 1 à 4 caractérisé en ce que le piston (21) présente plusieurs bourrelets d'évasement (30, 31).

6. Amortisseur selon une des revendications 1 à 5 caractérisé en ce que le piston (1, 21) présente un contour externe régulier en coupe longitudinale avec le bourrelet d'évasement (10, 30, 31).

7. Amortisseur selon une des revendications 1 à 5 caractérisé en ce que le piston (1, 21) présente un contour externe irrégulier en coupe longitudinale avec le bourrelet d'évasement (10, 30, 31).

8. Amortisseur selon une des revendications 1 à 7 caractérisé en ce que la gaine d'absorbeur (22) présente une épaisseur de paroi variant dans au moins un sens de sollicitation.
